(19) Europäisches Patentamt

European Patent Office

Office européen des brevets

(11) Veröffentlichungsnummer: **0 419 915 B1**

(12) **EUROPÄISCHE PATENTSCHRIFT**

(45) Veröffentlichungstag der Patentschrift: **21.12.94**

(21) Anmeldenummer: **90117288.2**

(22) Anmeldetag: **07.09.90**

(51) Int. Cl.⁵: **B27K 3/50**, B27K 5/02

(54) **Holzschutzmittel.**

(30) Priorität: **27.09.89 DE 3932157**

(43) Veröffentlichungstag der Anmeldung:
**03.04.91 Patentblatt 91/14**

(45) Bekanntmachung des Hinweises auf die
Patenterteilung:
**21.12.94 Patentblatt 94/51**

(84) Benannte Vertragsstaaten:
**AT BE CH DE DK ES FR GB GR IT LI LU NL SE**

(56) Entgegenhaltungen:
**EP-A- 0 198 165**
**DE-A- 2 729 460**
**FR-A- 2 305 283**

(73) Patentinhaber: **DESOWAG Materialschutz
GmbH
Postfach 32 02 20,
Rossstrasse 76
D-40417 Düsseldorf (DE)**

(72) Erfinder: **Goletz, Peter
Weserweg 90
D-4150 Krefeld 1 (DE)**
Erfinder: **Seepe, Detlef, Dr.
Schönwasserstrasse 211
D-4150 Krefeld 1 (DE)**

(74) Vertreter: **Lauer, Dieter, Dr.
c/o Solvay Deutschland GmbH
Hans-Böckler-Allee 20
D-30173 Hannover (DE)**

**Beschreibung**

Die vorliegende Erfindung betrifft ein chromatfreies Holzschutzmittel enthaltend mindestens eine quaternäre, wasserlösliche fungizide Ammoniumverbindung und/oder mindestens eine wasserlösliche, fungizide Diazeniumdioxiverbindung als bioziden Wirkstoff, Wasser als Verdünnungsmittel sowie ggf. Zusatzmittel und ein bestimmtes Pigmentgemisch.

Holzschutzmittel, die wasserlösliche, fungizide, quaternäre Ammoniumverbindungen als Bestandteil enthalten, sind bereits bekannt (vgl. DE-PS 2 132 701). Zum Stand der Technik gehören ebenso Holzschutzmittel auf der Basis Wasserlöslicher, fungizider, Diazeniumdioxiverbindungen. Versucht man diesen Holzschutzmitteln, die quaternäre Ammoniumverbindungen und/oder Diazeniumdioxiverbindungen als bioziden Wirkstoff enthalten mit organischen Pigmenten, insbesondere Phthaloxyaninpigmenten oder Bisazopigmenten anzufärben, so ergibt es sich, daß die Farbtöne nicht stabil sind und Farbänderungen auftreten, eine Lagerstabilität nicht mehr gewährleistet ist und in einigen Fällen auch eine schlechtere Eindringtiefe der mit dem Farbpigment versetzten Salze zu beobachten ist.

Die FR 23 05 283 beschreibt bereits ein Holzschutzmittel auf Basis von Azopigmenten oder Metallkomplexpigmenten mit nichtionischen Emulgatoren, die jedoch keine Kunstharz-bindemittel und auch keine Fluortenside enthalten.

Die DE-OS 27 29 460 beschreibt chromhaltige Holzschutzmittel mit Pigmenten (Monoazo- und Phthalcyaninmetallkomplex-Pigment). Fluortensid und Kunstharzbindemittel kommen hier ebenfalls nicht zum Einsatz.

Die EP-A 198 165 betrifft bereits Holzschutzmittel mit den Pigmenten aus der Gruppe der Phthalocyanine und Monoazopigmente. In diesen Zusammensetzungen gelingt es jedoch noch nicht, den Anteil an organisch-chemischen Lösungsmittel im anwendungsfertigen Holzschutzmittel mits 0,5 Gew.-% zu reduzieren. Zudem werden dort noch wasserunlösliche organisch-chemische Lösungsmittel, z.B. auf Basis flüssiger aliphatischer und/oder aromatischer Kohlenwasserstoffe, eingesetzt.

Verwendet man ein Pigmentfarbstoffgemisch mit einer elektrolytbeständigen Kunststoffdispersion, das zum Anfärben von chromathaltigen Holzschutzmitteln gemäß DE-PS 1 642 171 vorgesehen ist, insbesondere gemäß Beispielen 1 - 3 dieser Patentschrift, auch für fungizide quaternäre Ammoniumverbindungen und/oder Diazeniumdioxiverbindungen, so ist eine Übertragbarkeit nicht möglich, da die Farbstabilität nicht gegeben ist und Trübungen auftreten.

Ziel und Aufgabe der Erfindung war es, ein farbstabiles Holzschutzmittel auf der Basis wasserlöslicher fungizider Ammoniumverbindungen und/oder fungizider Diazeniumdioxiverbindungen zu erhalten. Die dazu verwendete Farbpaste bzw. Pigmentpaste sollte nach Möglichkeit innerhalb eines bestimmten pH-Bereiches stabil sein und das Holzschutzmittel sollte mit Hilfe der Farbpaste u. a. auch getrennt lagerbar und anfärbbar sein oder im farbpigmenthaltigen Zustand lagerfähig sein.

Erfindungsgemäß wurde festgestellt, daß diesen Zielen und Aufgaben ein chromatfreies Holzschutzmittel auf der Basis mindestens einer quaternären, wasserlöslichen, fungiziden Ammoniumverbindung und/oder mindestens einer wasserlöslichen, fungiziden Diazoniumdioxiverbindung als bioziden Wirkstoff gerecht wird.

Die Erfindung betrifft dem gemäss ein Holzschutzmittel enthaltend mindestens eine quaternäre, wasserlösliche, fungizide Ammoniumverbindung und/oder mindestens eine wasserlösliche, fungizide Diazoniumdioxiverbindung als bioziden Wirkstoff, mindestens ein Verdünnungsmittel oder Verdünnungsmittelgemisch, das zu mehr als 50 Gew.-% aus Wasser besteht sowie ggf. Zusatzmittel. Gemäß der Erfindung enthält das anwendungsfertige Holzschutzmittel je 100 Gew.-Teile 0,5 bis 4 Gew.-%, vorzugsweise 1 bis 3 Gew.-%, eines Pigment-Tensid-Lösungsmittelgemisches, bestehend aus

a) 1 bis 20 Gew.-Teilen,
(berechnet als Trockenpigment) Phthalocyaninpigment und/oder Bisazopigment,
b) 2 bis 20 Gew.-Teilen,
mindestens eines Tensides oder Tensidgemisches,
c) 0,5 bis 15 Gew.-Teilen,
mindestens eines organisch-chemischen, wasserlöslichen Lösemittels oder Lösemittelgemisches,
e) 2 bis 20 Gew.-Teilen,
mindestens eines Kunstharzbindemittels (berechnet als Feststoff),
f) 0,05 bis 5 Gew.-Teilen
eines Rußpigmentes und/oder
g) 0 bis 5 Gew.-Teilen
mindestens eines wasserlöslichen, organischen Farbstoffes oder Farbstoffgemisches oder Farbkorrigens und/oder

h) 0,05 bis 6 Gew.-Teilen

eines Additivs, Entschäumungsmittels, oder anderen Zusatzmittels sowie

d) als Restbestandteil 10 - 90 Gew.-Teilen Wasser oder besteht daraus.

Nach einer bevorzugten Ausführungsform enthält das anwendungsfertige Holzschutzmittel je 100 Gew.-Teile 0,5 bis 4 Gew.-%, vorzugsweise 1 bis 3 Gew.-%, eines Pigment-Tensid-Lösungsmittelgemisches, bestehend aus

a) 4 bis 15 Gew.-Teilen,

(berechnet als Trockenpigment) Phthalocyanin pigment und/oder Bisazopigment,

b) 5 bis 15 Gew.-Teilen,

mindestens eines Tensides oder Tensidgemisches,

c) 1 bis 10 Gew.-Teilen,

mindestens eines organisch-chemischen, wasserlöslichen Lösemittels oder Lösemittelgemisches,

e) 7 bis 15 Gew.-Teilen,

mindestens eines Kunstharzbindemittels (berechnet als Feststoff),

f) 0,1 bis 2 Gew.-Teilen

eines Rußpigmentes und/oder

g) 0,1 bis 3 Gew.-Teilen

mindestens eines wasserlöslichen, organischen Farbstoffes oder Farbstoffgemisches oder Farbkorrigens und/oder

h) 30 bis 60 Gew.-Teilen

eines Additivs, Entschäumungsmittels, oder anderen Zusatzmittels sowie

d) als Restbestandteil

12 - 80 Gew.-Teilen

Wasser oder enthaltend diese Bestandteile.

Als Tensid wird gemäß der Erfindung mindestens ein Fluortensid oder ein Tensidgemisch aus mindestens einem Fluortensid und einem nichtionischen Tensid eingesetzt.

Als nichtionische Tenside gelangen die an sich bekannten nichtionischen Tenside oder Tensidgemische, z. B. Polyoxyethylenderivate und/oder Polyalkylen- oder Polyalkylglykoläther und/oder eine oder mehrere Polyoxyethylengruppen und/oder eine oder mehrere Äther-und/oder Oxy- oder Oxo- und/oder Fettsäuregruppen enthaltende oberflächenaktive, nichtionogene, organisch-chemische Verbindungen zum Einsatz.

Bevorzugt werden Polyoxyäthylen (30)-Nonylphenol, Polyoxyäthylen-(2)- bzw. Polyoxyäthylen-(10)-Oleylalkohol, Polyoxyäthylen-Sorbitol-Oleat-Laurat, Polyoxyäthylen (20)-Sorbitan-Laurat, Polyoxyäthylen-Monooleat, Polyoxyäthylen-Monostearat, Polyalkylglykoläther, Sorbitan-Monolaurat allein oder in Abmischung untereinander als Tensid oder Tensidgemisch gemisch verwendet.

Besonderes bevorzugt werden als nichtionogene Tenside oder Tensidgemishe Polyoxyethylen-Oleyläther, Polyalkylglykoläther, Polyoxyethylen-Sorbitol-Oleat-Laurat, Polyoxyethylen-Sorbitan-Oleat-Laurat und/oder Polyoxyethylen (30)-Nonylphenol eingesetzt.

Nach einer weiteren bevorzugten Ausführungsform wird ein Tensidgemisch eingesetzt, das aus einem Gemisch von Polyoxyethylen(30)-Nonylphenol und/oder Polyalkylenglykolester und/oder Polyoxyäthylen-Sorbitan-Oleat-Laurat oder Polyoxyäthylen-Sorbitan-Oleat-Laurat und/oder Polyoxyäthylen-(10)- und/oder Polyoxyäthylen-(2)-Oleylalkohol, besteht. Bei einem Gemisch von Polyoxyethylen(30)-Nonylphenol und Polyalkylglykolester bzw. Polyoxyethylen-(2)-und Polyoxyethylen-(10)-Oleylalkohol wird im allgemeinen ein Gewichtsverhältnis 5 : 1 bis 1 : 5, vorzugsweise 2 : 1 bis 1 : 2, eingehalten.

Bei einem Gemisch von Polyoxyethylen(30)-Nonylphenol und Polyalkylen- oder Polyalkylgly kolester und/oder -äther und/oder Isopropylamin-dodecylsulfonat und/oder Fluortensid wird nach einer Ausführungsform zweckmäßig ein Gewichtsverhältnis 20 : 20 : (1) bis 1 : 1 : (5), vorzugsweise 10 : 10 (1) bis 1 : 1 : (3) eingehalten.

Als wasserunlösliche Phthalocyaninpigmente werden bevorzugt Phthalocyaninpigment blau und/oder grün, als Azopigmente oder Bisazopigmente bevorzugt Bisazopigment orange und/oder Bisazopigment gelb eingesetzt.

Als Verdünnungsmittel für den bioziden wasserlöslichen Wirkstoff wird ein Verdünnungsmittel oder Verdünnungsmittelgemisch eingesetzt, das zu mehr als 50 Gew.-%, vorzugsweise mehr als 92 Gew.-% Wasser (bezogen auf 100 Gew.-% Verdünnungsmittel) sowie gegebenenfalls wasserlösliche, organisch-chemische Verdünnungsmittel, vorzugsweise polare Gruppen enthaltende Lösemittel, eingesetzt. Bevorzugt gelangt ausschließlich Wasser als Löse- bzw. Verdünnungsmittel zur Anwendung.

Als quaternäre Ammoniumverbindung wird bevorzugt mindestens eine Trialkylarylalkylammoniumverbindung verwendet, die vorzugsweise als Anion Halogen-, -Nitro- oder Sulfatgruppen enthält.

Dabei werden als quaternäre Ammoniumverbindungen Trialkylarylalkylammoniumverbindungen eingesetzt, die vorzugsweise zwei Alkylreste mit $C_1$ bis $C_5$ und einen langkettigen Alkylrest mit $C_{10}$ bis $C_{18}$, vorzugsweise $C_{12}$ bis $C_{16}$, enthalten. Die kurzkettigen Alkylreste wurden in der vorzugsweisen Ausführungsform $C_1$ bis $C_2$ eingesetzt.

Nach einer bevorzugten Ausführungsform wird als quaternäre Ammoniumverbindung ein Gemisch von Benzyldimethylalkylammoniumhalogeniden eingesetzt, von denen die eine quaternäre Ammoniumverbindung einen Alkylrest von $C_{12}$ bis $C_{14}$, die andere einen Alkylrest von $C_{15}$ bis $C_{18}$ aufweist oder eine Mischung von quaternären Ammoniumverbindungen mit mindestens einem unterschiedlich langen Alkylrest, von denen der Alkylrest mit der geringeren C-Zahl 40 bis 80 Gew.-%, vorzugsweise 50 bis 70 Gew.-% und die quaternäre Ammoniumverbindung mit dem längeren Alkylrest 60 bis 20 Gew.-%, vorzugsweise 50 bis 30 Gew.-%, bezogen auf 100 Gew.-Teile eingesetzte quaternäre fungizide Ammoniumverbindungen beträgt.

Als fungizide Diazoniumdioxiverbindung oder Diazeniumdioxiverbindung werden bevorzugt Kupfer-di-(N-cy-clohexyldiazoniumdioxi- oder Kupfer-di-(N-cyclohexyldiazeniumdioxi)-Verbindungen verwendet.

Der pH-Wert des erfindungsgemäßen Pigment-Tensid-Lösungsmittelgemisches beträgt 6 bis 13, vorzugsweise 7 bis 9.

EP 0 419 915 B1

Beispiele

| | 1 | 2 | 3 | 4 | 5 | 6 |
|---|---|---|---|---|---|---|
| | | | Gewichtsprozente | | | |
| Kupfer-di-(N-Cyclo-hexyldiazoniumdioxy)-Verbindung | 3 | 5 | 10 | – | – | – |
| Quart. Ammoniumver-bindung mit $CH_3$-Alkyl und $C_{14}$-Alkyl | – | – | – | 4 | 6 | 10 |
| Polyvinylacetat | 0,015 | 0,015 | 0,015 | 0,015 | 0,015 | 0,015 |
| Polyglykol 400 | 0,001 | 0,001 | 0,001 | 0,001 | 0,001 | 0,001 |
| 1.2 Propandiol | 0,001 | 0,001 | 0,001 | 0,001 | 0,001 | 0,001 |
| Tensid $T_1$ 2) | 0,0005 | 0,0005 | 0,0005 | 0,0005 | 0,0005 | 0,0005 |
| Tensid $T_2$ 3) | 0,0010 | 0,0010 | 0,0010 | 0,0010 | 0,0010 | 0,0010 |
| Tensid $T_3$ 4) | 0,0010 | 0,0010 | 0,0010 | 0,0010 | 0,0010 | 0,0010 |

| | | | | | | |
|---|---|---|---|---|---|---|
| $\alpha$.Cu-Phthalocya-nin, stab. | 0,0015 | 0,0015 | 0,0015 | 0,0015 | 0,0015 | 0,0015 |
| Disazopigment C.J.P.O. 34/21115 | 0,012 | 0,012 | 0,012 | 0,012 | 0,012 | 0,012 |
| Rußpigment 34 | 0,0025 | 0,0025 | 0,0025 | 0,0025 | 0,0025 | 0,0025 |
| Entschäumer | 0,0001 | 0,0001 | 0,0001 | 0,0001 | 0,0001 | 0,0001 |
| Wasser | 96,9644 | 94,9644 | 89,9644 | 95,9644 | 93,9644 | 89,9644 |
| Gew.-% | 100,0000 | 100,0000 | 100,0000 | 100,0000 | 100,0000 | 100,0000 |

Tensid $T_1$: Polyoxyäthylen-(4 bis 23)-lauryl-oleyl-Alkohole

Tensid $T_2$: modifiziertes Fluortensid

Tensid $T_3$: Fluortensid

EP 0 419 915 B1

## Beispiele für die Farbppaste

Gewichtsteile

|  | 7 | 8 | 9 | 10 | 11 |
|---|---|---|---|---|---|
| Vinylacetatcopolymerisat | 90,- | 100,- | 150,- | 90,- | 150,- |
| Rußpigment | 15,- | 30,- | 25,- | 15,- | 25,- |
| $\alpha$-Cu-Phthalocyanin, stab. | 8,- | 17,- | 14,- | 8,- | 14,- |
| Diazopigment | | | | | |
| C.J.P.O. 34/2115 | 70,- | 150,- | 120,- | 70,- | 120,- |
| Entschäumgsmittel | 1,- | 1,- | 1,- | 1,- | 1,- |
| Polygykol 400 | 50,- | 96,- | 80,- | 50,- | 80,- |
| 1.2 Propandiol | 6,- | 12,- | 10,- | 6,- | 10,- |
| Tensid $T_1$ | 6,- | 12,- | 10,- | - | 10,- |
| Tensid $T_2$ | 6,- | 12,- | 10,- | - | - |
| Tensid $T_3$ | 6,- | 12,- | 10,- | 18,- | 20,- |
| Wasser | 742,- | 558,- | 570,- | 742,- | 570,- |
| | 1000,- | 1000,- | 1000,- | 1000,- | 1000,- |

0,5 bis 4 Gew.-%, vorzugsweise 1 bis 3 Gew.-%, der Farbpaste werden je 100 Gew.-Teile des jeweils anwendungsfertigen Holzschutzmittels zugegeben, das je 100 Gew.-Teile des anwendungsfertigen Holzschutzmittels 1,5 bis 12 Gew.-%, vorzugsweise 2,5 bis 5 Gew.-% mindestens einer quaternären, fungiziden, wasserlöslichen Ammoniumverbindung und/oder mindestens einer wasserlöslichen fungiziden Diazeniumdioxiverbindung (berechnet als Festsubstanz) enthält oder das anwendungsfertige Holzschutzmittel aus Wasser und einer oder mehreren dieser fungiziden Verbindungen besteht.

## Patentansprüche

1. Chromatfreies Holzschutzmittel enthaltend mindestens eine quaternäre, wasserlösliche, fungizide Ammoniumverbindung und/oder mindestens eine wasserlösliche, fungizide Diazoniumdioxiverbindung als bioziden Wirkstoff, mindestens ein Verdünnungsmittel oder Verdünnungsmittelgemisch, das zu mehr

7

als 50 Gew.-% aus Wasser besteht, sowie ggf. Zusatzmittel, dadurch gekennzeichnet, daß das anwendungsfertige Holzschutzmittel je 100 Gew.-Teile

0,5 bis 4 Gew.-%, vorzugsweise

1 bis 3 Gew.-%,

eines Pigment-Tensid-Lösungsmittelgemisches, bestehend aus

a) 1 bis 20 Gew.-Teilen,

(berechnet als Trockenpigment) Phthalocyaninpigment und/oder Bisazopigment,

b) 2 bis 20 Gew.-Teilen,

mindestens eines Fluortensides oder eines Tensidgemisches aus mindestens einem Fluortensid und einem nichtionischen Tensid,

c) 0,5 bis 15 Gew.-Teilen,

mindestens eines organisch-chemischen, wasserlöslichen Lösemittels oder Lösemittelgemisches,

e) 2 bis 20 Gew.-Teilen,

mindestens eines Kunstharzbindemittels (berechnet als Feststoff),

f) 0,05 bis 5 Gew.-Teilen

eines Rußpigmentes,

g) 0 bis 5 Gew.-Teilen

mindestens eines wasserlöslichen, organischen Farbstoffes oder Farbstoffgemisches oder Farbkorrigens,

h) 0,05 bis 6 Gew.-Teilen

eines Additivs, Entschäumungsmittels, oder anderen Zusatzmittels sowie

d) als Restbestandteil

10 - 90 Gew.-Teilen

Wasser enthält oder daraus besteht.

**2.** Holzschutzmittel nach Anspruch 1,

dadurch gekennzeichnet, daß das anwendungsfertige Holzschutzmittel je 100 Gew.-Teile

0,5 bis 4 Gew.-%, vorzugsweise

1 bis 3 Gew.-%,

eines Pigment-Tensid-Lösungsmittelgemisches, bestehend aus

a) 4 bis 15 Gew.-Teilen,

(berechnet als Trockenpigment) Phthalocyaninpigment und/oder Bisazopigment,

b) 5 bis 15 Gew.-Teilen,

mindestens eines Fluortensides oder eines Tensidgemisches aus mindestens einem Fluortensid und einem nichtionischen Tensid,

c) 1 bis 10 Gew.-Teilen,

mindestens eines organisch-chemischen, wasserlöslichen Lösemittels oder Lösemittelgemisches,

e) 7 bis 15 Gew.-Teilen,

mindestens eines Kunstharzbindemittels (berechnet als Feststoff),

f) 0,1 bis 2 Gew.-Teilen

eines Rußpigmentes und/oder

g) 0,1 bis 3 Gew.-Teilen

mindestens eines wasserlöslichen, organischen Farbstoffes oder Farbstoffgemisches oder Farbkorrigens

h) 30 bis 60 Gew.-Teilen

eines Additivs, Entschäumungsmittels, oder anderen Zusatzmittels sowie

d) als Restbestandteil

12 - 80 Gew.-Teilen

Wasser enthält oder daraus besteht.

## Claims

**1.** A chromate-free wood protection agent containing at least one quaternary, water-soluble, fungicidal ammonium compound and/or at least one water-soluble, fungicidal diazonium dioxy compound as a biocidal active substance, at least one diluent or diluent mixture which consists of more than 50% by weight water, and also optionally addition agent, characterised in that the wood protection agent ready for use contains or consists of, per 100 parts by weight,

0.5 to 4% by weight, preferably

1 to 3% by weight,

of a pigment/tenside/solvent mixture, consisting of

a) 1 to 20 parts by weight,

(calculated as dry pigment) phthalocyanine pigment and/or bisazo pigment,

b) 2 to 20 parts by weight

of at least one fluorotenside or a tenside mixture of at least one fluorotenside and a non-ionic tenside,

c) 0.5 to 15 parts by weight

of at least one organic-chemical, water-soluble solvent or solvent mixture,

e) 2 to 20 parts by weight

of at least one synthetic resin binder (calculated as solid),

f) 0.05 to 5 parts by weight

of a carbon black pigment,

g) 0 to 5 parts by weight

of at least one water-soluble, organic dye or dye mixture or dye corrector,

h) 0.05 to 6 parts by weight

of an additive, defoaming agent, or other addition agent, and also

d) as remaining constituent

10 - 90 parts by weight

water.

2. A wood protection agent according to Claim 1, characterised in that the wood protection agent ready for use contains or consists of, per 100 parts by weight,

0.5 to 4% by weight, preferably

1 to 3% by weight,

of a pigment/tenside/solvent mixture, consisting of

a) 4 to 15 parts by weight,

(calculated as dry pigment) phthalocyanine pigment and/or bisazo pigment,

b) 5 to 15 parts by weight

of at least one fluorotenside or a tenside mixture of at least one fluorotenside and a non-ionic tenside,

c) 1 to 10 parts by weight

of at least one organic-chemical, water-soluble solvent or solvent mixture,

e) 7 to 15 parts by weight

of at least one synthetic resin binder (calculated as solid),

f) 0.1 to 2 parts by weight

of a carbon black pigment, and/or

g) 0.1 to 3 parts by weight

of at least one water-soluble, organic dye or dye mixture or dye corrector,

h) 30 to 60 parts by weight

of an additive, defoaming agent, or other addition agent, and also

d) as remaining constituent

12 - 80 parts by weight

water.

**Revendications**

1. Agent, sans chromate, préservateur du bois et contenant au moins un composé hydrosoluble d'ammonium quaternaire fongicide et/ou au moins un composé hydrosoluble de diammonium dioxy fongicide comme substance à activité biocide, au moins un diluant ou un mélange de diluants, consistant pour plus de 50 % en poids en eau, ainsi qu'éventuellement de l'additif, agent caractérisé en ce que l'agent préservateur du bois, prêt à l'emploi, contient, ou consiste en, pour 100 parties en poids :

0,5 à 4 % en poids, avantageusement 1 à 3 % en poids,

d'un mélange de pigment/tensio actif/solvant, consistant en :

a) 1 à 20 parties en poids (calculées en pigment sec) de pigment de type phtalocyanine et/ou de pigment bisazoïque,

b) 2 à 20 parties en poids

d'au moins un tensio-actif fluoré ou d'un mélange de tensio-actifs consistant en au moins un tensio-actif fluoré et en un tensio-actif non ionique,

c) 0,5 à 15 parties en poids d'au moins un solvant ou mélange de solvants organo-chimique(s), hydrosoluble(s),

e) 2 à 20 parties en poids d'au moins une matière synthétique ou plastique liante (calculée en solide)

f) 0,05 à 5 parties en poids d'un pigment à base de, ou constitué par, du noir de fumée,

g) 0 à 5 parties en poids d'au moins un colorant, ou mélange de colorants, organique hydrosoluble ou d'un correcteur de couleur,

h) 0,05 à 6 parties en poids d'un additif, d'un agent de démoussage ou d'un autre produit ajouté, et

d) comme fraction constitutive restante

10 à 90 parties en poids d'eau

2. Agent préservateur du bois selon la revendication 1, caractérisé en ce que l'agent préservateur du bois, prêt à l'emploi, contient, ou consiste en, pour 100 parties en poids :

0,5 à 4 % , avantageusmeent 1 à 3 % en poids d'un mélange de pigment/tensio-actif/solvant, consistant en :

a) 4 à 15 parties en poids (calculées en pigment sec) d'un pigment de type phtalocyanine et/ou d'un pigment bisazoïque,

b) 5 à 15 parties en poids

d'au moins un tensio-actif fluoré ou d'un mélange de tensio-actifs consistant en au moins un tensio-actif fluoré et un tensio-actif non ionique,

c) 1 à 10 parties en poids d'au moins un solvant ou mélange de solvants, hydrosoluble, chimique organique,

e) 7 à 15 parties en poids d'au moins une résine ou matière plastique ou synthétique liante (calculée en solide),

f) 0,1 à 2 parties en bois d'un pigment à base de noir de fumée, et/ou

g) 0,1 à 3 parties en poids d'au moins un colorant organique ou d'un mélange de colorants organique, hydrosoluble ou d'un correcteur de couleur,

h) 30 à 60 parties en poids d'un additif, d'un agent de démoussage ou d'un autre produit ajouté, et

d) comme fraction constitutive restante 12 à 80 parties en poids d'eau.